# EUROPÄISCHE PATENTSCHRIFT

(11) **EP 2 223 289 B1**
(45) Veröffentlichungstag und Bekanntmachung des Hinweises auf die Patenterteilung: **20.04.2011**
(21) Anmeldenummer: 08862873.0
(22) Anmeldetag: 12.11.2008
(51) Int. Cl.: G07G 1/00, G07G 1/12, G06F 13/38, G06F 13/40, G06F 1/18

(54) **KASSENSYSTEM**
CHECKOUT SYSTEM
SYSTÈME DE CAISSE

(30) Priorität: 15.12.2007 DE 202007017525 U
(43) Veröffentlichungstag der Anmeldung: 01.09.2010
(73) Patentinhaber: Wincor Nixdorf International GmbH, 33106 Paderborn (DE)
(72) Erfinder: BAITZ, Guenter, 13629 Berlin (DE); KIRSCHKE, Uwe, 13505 Berlin (DE)
(86) Internationale Anmeldenummer: PCT/EP2008/009525
(87) Internationale Veröffentlichungsnummer: WO 2009/077041

(56) Entgegenhaltungen:
- DE-A1-102004 040 856
- JP-A- 5 047 444
- JP-A- 9 006 719
- US-A- 4 501 460

## Beschreibung

Die Erfindung betrifft ein Kassensystem für die Abwicklung von Verkaufs- oder Zahlungsvorgängen mit einem Rechnermodul zur elektronischen Verarbeitung von zahlungsrelevanten Daten, mit mindestens einem Peripheriemodul, das mit dem Rechnermodul elektrisch und mechanisch verbunden ist, wobei sich an einer Gehäusewandung des Rechnermoduls eine Gehäusewandung mindestens eines Peripheriegerätes unter paralleler Anordnung der zueinander gekehrten Gehäusewandungen des Rechnermoduls und des Peripheriemoduls anschließt.

Aus der DE 10 2004 040 856 A1 ist ein Kassensystem für die Abwicklung von Verkaufs- oder Zahlungsvorgängen bekannt, das als zentrale Baueinheit ein Gehäuse umfasst, in dem ein Rechnermodul zur elektronischen Verarbeitung von zahlungsrelevanten Daten und als Peripheriemodul eine lösbar mit dem Rechnermodul verbindbare Festplatte angeordnet sind. Das Rechnermodul ist als ein Mainboard ausgebildet, in dem sich die Zentraleinheit befindet. Die Festplatte ist verschiebbar in einem Fach des Gehäuses des Rechnermoduls angeordnet, so dass ein Austausch der Festplatte zu Servicezwecken unter relativ einfacher Handhabung ermöglicht wird. Allerdings ist die Festplatte in einem Rahmen gelagert, der mittels einer Schraubverbindung an dem Rechnermodul festlegbar ist. Nachteilig hieran ist, dass ein Austausch des Peripheriemoduls nur unter Zuhilfenahme eines Schraubwerkzeuges möglich ist.

Aus der US 4 501 460 ist zwar ein Rechnersystem bekannt geworden, bei dem ein Rechnermodul ohne Zuhilfenahme eines Werkzeuges mit einem als Speichermedium ausgebildeten Peripheriemodul verriegelbar bzw. entriegelbar ist. Die hierfür vorgesehen Verriegelungseinrichtung umfasst jedoch eine Hebelmechanik sowie ein sich längs einer Gehäusewandung des Rechnermoduls erstreckenden Verriegelungselementes, das mittels der Hebelmechanik zwischen einer Verriegelungsstellung und einer Entriegelungsstellung längsverschieblich bewegbar ist. In der Verriegelungsstellung werden zuvor eingesetzte Haken des Peripheriemoduls in korrespondierende Ausnehmungen in der Gehäusewand des Rechnermoduls miteinander verklemmt. In der Verriegelungsstellung ist das Peripheriemodul über eine elektrische Steckeinrichtung mit dem Rechnermodul elektrisch kontaktiert. In der Entriegelungsstellung werden die Haken des Rechnermoduls in einer Außerklemmstellung zu den Ausnehmungen des Rechnermoduls verbracht, so dass das Peripheriemodul aus einer Anlagestellung, an der zueinander gekehrte Gehäusewandungen des Rechnermoduls und des Peripheriemoduls unmittelbar aneinander liegen, von dem Rechnermodul entfernt wird. Nachteilig an dem bekannten Rechnersystem ist, dass die Verriegelungseinrichtung relativ aufwendig ausgestaltet ist. Sie weist insbesondere einen relativ großen Platzbedarf auf.

Aufgabe der vorliegenden Erfindung ist es, ein Kassensystem für die Abwicklung von Verkaufs- oder Zahlungsvorgängen derart weiterzubilden, dass auf handhabungstechnisch einfache Weise ohne Zuhilfenahme von Werkzeug eine Montage bzw. Demontage von einem Rechnermodul sowie mindestens einem Peripheriemodul gewährleistet ist.

Zur Lösung dieser Aufgabe ist die Erfindung in Verbindung mit dem Oberbegriff des Schutzanspruchs 1 dadurch gekennzeichnet, dass das Peripheriemodul über eine elektrische Steckeinrichtung mit dem Rechnermodul und/oder mit einem weiteren Peripheriemodul elektrisch kontaktiert ist, wobei die elektrische Steckeinrichtung zumindest korrespondierende Steck-/Anschlusselemente aufweist, die jeweils an den zueinander gekehrten Gehäusewandungen der benachbarten Module angeordnet sind, und dass das Peripheriemodul mittels einer Rasteinrichtung mit dem Rechnermodul und/oder mit mindestens dem weiteren Peripheriemodul mechanisch verriegelbar ist.

Der besondere Vorteil der Erfindung besteht darin, dass mit relativ geringem Aufwand eine sichere und zuverlässige Ver- und Entriegelung zwischen einem Rechnermodul und mindestens einem Peripheriemodul ermöglicht wird.

Grundgedanke der Erfindung ist es, zum einen eine elektrische Steckeinrichtung und zum anderen eine Rasteinrichtung zum Verriegeln zweier Module einzusetzen. Die elektrische Steckeinrichtung ermöglicht, dass die zu verbindenden Module unter unmittelbarer Anlage zueinander gekehrter Gehäusewandungen der Module lediglich mit einem einzigen Freiheitsgrad in der Montagestellung positioniert sind. Die Rasteinrichtung ermöglicht ein Verriegeln dieser Module in der Montagestellung, so dass die Module ohne Zuhilfenahme eines Werkzeugs miteinander elektrisch und mechanisch verbunden bzw. voneinander entfernt werden können.

Nach einer bevorzugten Ausführungsform der Erfindung sind dem Rechnermodul zwei Peripheriemodule zugeordnet, wobei ein Peripheriemodul als Verteilmodul ausgebildet ist, das über an einer ersten Gehäusewandung desselben angeordnete erste Steckelemente und erste Rastelemente mit dem Rechnermodul und mittels an einer zweiten Gehäusewandung angeordnete zweite Steckelemente und zweite Rastelemente mit dem zweiten Peripheriemodul verbindbar ist. Das Verteilmodul weist somit eine Mittlerfunktion auf, wobei das erste Steckelement und das zweite Steckelement dazu genutzt werden können, eine elektrische Durchleitung von dem zweiten Peripheriemodul zu dem Rechnermodul zu ermöglichen. Vorteilhaft kann somit auf eine mechanische und elektrische Verbindung zwischen dem zweiten Peripheriemodul und dem Rechnermodul verzichtet werden. Die elektrische und mechanische Verbindung erfolgt mittels des Verteilmoduls, wobei die Montage durch Verwendung der Rasteinrichtung gemäß einer Schnappverbindung einfach ausgestaltet ist.

Nach einer Weiterbildung der Erfindung sind das Rechnermodul und die Peripheriemodule quaderförmig ausgebildet. Vorzugsweise sind die Module derart dimensioniert, dass sie im montierten Zustand eine quaderförmige Baueinheit bilden. Im zusammengesteckten und verriegelten Zustand wird somit eine kompakte Baueinheit gebildet, die das Herzstück des Kassensystems bildet und auf der beispielsweise ein Bildschirm positionierbar ist. Die freien Randseiten bzw. freien Gehäusewandungen der Module schließen dabei bündig zu den freien Gehäusewandungen der benachbarten Module ab. Hierdurch ist ein kompakter Aufbau gegeben.

Nach einer Weiterbildung der Erfindung weist das Verteilmodul an einer Vorderseite eine zu der Anzahl der Rasteinrichtungen korrespondierende Anzahl von Betätigungselementen auf, mittels derer die Rasteinrichtungen jeweils betätigbar sind. Bedienungsfreundlich kann hierdurch insbesondere die Entriegelung von einer Seite des Verteilmoduls her erfolgen.

Nach einer Weiterbildung der Erfindung weisen die Module an einer Rückseite mehrere Anschlüsse zur elektrischen Verbindung mit weiteren Peripheriegeräten und/oder einem Stromversorgungsanschluss auf. Im montierten Zustand erstrecken sich die Rückseiten der Module in einer gemeinsamen Ebene. Vorteilhaft können hierdurch die Peripheriegeräte, wie beispielsweise ein Monitor, eine Kassentastatur, ein Scanner, ein Kassendrucker und dergleichen an einer gemeinsamen Seite der resultierenden Baueinheit angeschlossen werden.

Nach einer Weiterbildung der Erfindung ist das Verteilmodul als ein Hub (IO-Hub) und das zweite Peripheriemodul als ein Netzteil ausgebildet. Da ein Großteil der weiteren Peripheriegeräte, wie Bildschirm, Kassentastatur und dergleichen an dem Hub angeschlossen sind, kann der Aufwand beim Wechsel des Rechnermoduls und/oder des Netzteils verringert werden, da nur die an der Rückseite des Rechnermoduls bzw. des Netzteils angeschlossenen Kabel herausgezogen werden müssen.

Hierdurch ergibt sich eine modulare Anordnung von Komponenten des Kassensystems, so dass bei Austausch von Hard- oder Software nur das hierfür erforderliche Modul ausgetauscht werden muss. Darüber hinaus ermöglicht die Modularität, dass an dem Verteilmodul Rechnermodule ansetzbar sind, die eine unterschiedliche Höhe aufweisen.

Nach einer Weiterbildung der Erfindung ist in dem Verteilmodul eine Speichereinheit integriert angeordnet, so dass kassenrelevante Daten in dem Verteilmodul speicherbar sind. Vorteilhaft stehen somit die kassenspezifischen Daten bei einem Austausch des Rechnermoduls in der resultierenden Baueinheit zur Verfügung. Nach Installation des Rechnermoduls kann dieses die kassenspezifischen Daten aus dem Verteilmodul auslesen.

Weitere Vorteile der Erfindung ergeben sich aus den weiteren Unteransprüchen.

Ausführungsbeispiele der Erfindung werden nachfolgend der Zeichnungen näher erläutert.

Es zeigen:
- Figur 1: eine perspektivische Vorderansicht eines erfindungsgemäßen Kassensystems mit drei Modulen im montierten Zustand,
- Figur 2: eine Vorderansicht eines Verteilmoduls des Kassensystems und

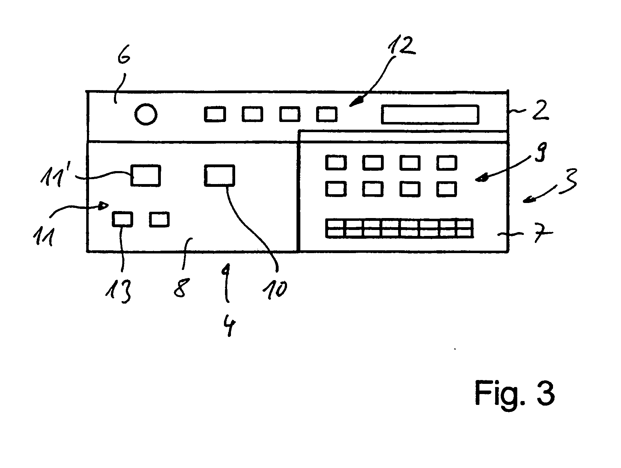

- Figur 3: eine Rückansicht der Module im montierten Zustand.

Ein Kassensystem 1 für die Abwicklung von Verkaufs- oder Zahlungsvorgängen in beispielsweise Supermärkten oder dergleichen besteht im Wesentlichen aus einer elektronischen Kasseneinrichtung, die modular aus mehreren Modulen zusammengesetzt ist. Im vorliegenden Ausführungsbeispiel besteht die Kasseneinrichtung aus einem Rechnermodul 2 zur elektronischen Verarbeitung von zahlungsrelevanten Daten und zwei Peripheriemodulen 3, 4, wobei ein erstes Peripheriemodul 3 als ein Verteilmodul ausgebildet ist, das sowohl mit dem Rechnermodul 2 als auch mit dem zweiten Peripheriemodul 4 elektrisch und mechanisch verbunden ist. Die Rechnereinheit weist ein Rechnerboard (Mainboard) und einen Arbeitsspeicher auf. An einer Rückseite 6 des Rechnermoduls 2 sind Anschlüsse 12 (COM-Anschlüsse, USB-Anschlüsse, LAN-Anschlüsse) vorgesehen.

Das Verteilmodul 3 ist vorzugsweise als ein Hub ausgebildet, in dem eine Speichereinheit 5 integriert angeordnet ist. An einer Rückseite 7 des Verteilmoduls 3 sind Anschlüsse 9 vorgesehen, die beispielsweise eine Anzahl von COM-Anschlüssen sowie 12 V-Anschlüsse umfassen.

Die Speichereinheit 5 kann beispielsweise als Massenspeicher (Festplatte, Wechselfestplatte) oder als ein Floppy-Laufwerk, CD-Rom-Laufwerk, DVD-Laufwerk oder Multikartenleser ausgebildet sein.

Das zweite Peripheriemodul 4 ist vorzugsweise als ein Netzteil ausgebildet, das an einer Rückseite 8 desselben als Anschlüsse 11 einen Netzanschluss 11' zur Kabelverbindung mit einem Stromversorgungsanschluss, einen Monitoranschluss 10 zur Kabelverbindung mit einem nicht dargestellten Monitor und mindestens einen weiteren Stromversorgungsanschluss 13 (24 V) zur Speisung anderer Module oder Peripheriegeräte aufweist.

Die genannten Anschlüsse 9, 11, 12 ermöglichen den Anschluss von Handelsperipheriegeräten, wie zum Beispiel Kassendruckern, Barcode-Scannern, Zeilendisplays, Geldladen, Kassentastaturen, Flachbildschirmen etc. an die Kasseneinrichtung 1.

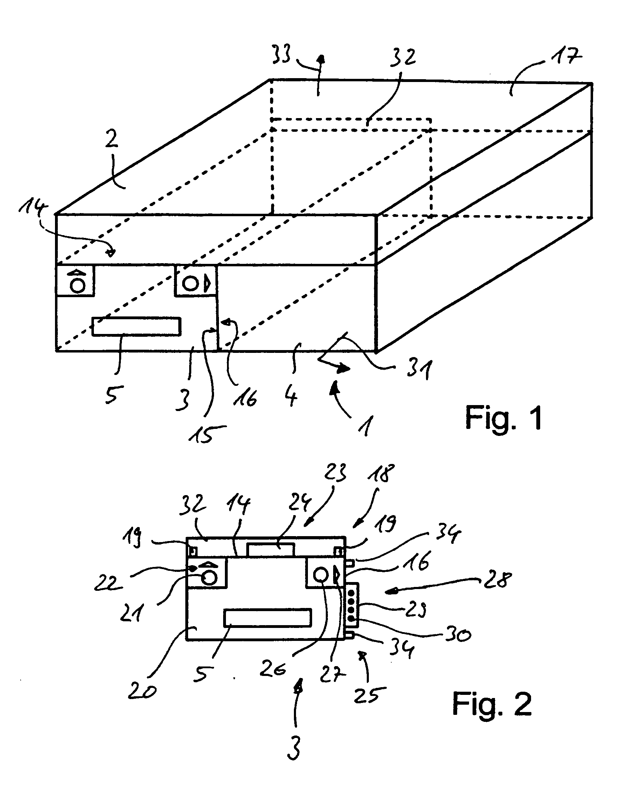

Wie aus Figur 1 ersichtlich ist, sind die Module 2, 3, 4 jeweils quaderförmig ausgebildet. Ein unterer Bereich der Kasseneinrichtung 1 wird durch das Verteilmodul 3 und das weitere Peripheriemodul 4 gebildet. Das Verteilmodul 3 weist eine senkrecht zu einer dem Rechnermodul 2 zugewandten ersten Gehäusewandung 14 verlaufende zweite Gehäusewandung 16 (Seitenwandung) auf, die in der Montagestellung flächig an einer korrespondierenden Gehäusewandung 15 des zweiten Peripheriemoduls 4 anliegt. Die in der Montagestellung befindlichen Module 2, 3, 4 bilden eine würfelförmige bzw. quaderförmige Baueinheit, wobei eine obere Gehäusewandung 17 des Rechnermoduls 2 als Auflagefläche für einen Monitor dienen kann.

In der Montagestellung sind das Rechnermodul 2 und das zweite Peripheriemodul 4 jeweils elektrisch und mechanisch mit dem Verteilmodul 3 verbunden. Zur elektrischen und mechanischen Kopplung zwischen dem Verteilmodul 3 und dem Rechnermodul 2 ist eine erste Rasteinrichtung 18 vorgesehen, die von der oberen Gehäusewandung 14 des Verteilmoduls abragende Rastelemente 19 umfasst, die in der Montagestellung (Verriegelungsstellung) einen nicht dargestellten und an dem Rechnermodul 2 angeordneten Steg hintergreifen. An einer Vorderseite 20 des Verteilmoduls 3 ist in einem oberen Bereich ein der ersten Rasteinrichtung 18 zugeordnetes Betätigungselement 21 vorgesehen, das als ein Tastenelement ausgebildet sein kann, so dass durch Drücken des Tastenelementes eine Entriegelung zwischen dem Verteilmodul 3 und dem Rechnermodul 2 vorgenommen werden kann. Nach Entriegelung kann das Rechnermodul 2 dann angehoben und von dem Verteilmodul 3 entfernt werden. Zur Visualisierung der Zuordnung des ersten Betätigungselementes 21 zu der ersten Rasteinrichtung 18 ist dem ersten Betätigungselement 21 ein Hinweiselement 22 (Pfeil) zugeordnet.

Zur elektrischen Kontaktierung zwischen dem Rechnermodul 2 und dem Verteilmodul 3 ist eine erste Steckeinrichtung 23 vorgesehen, die über Steck-/Anschlusselemente 24 verfügt. Die Steck-/Anschlusselemente 24 des Verteilmoduls 3 können in einem vorderen Bereich der ersten Gehäusewandung 14 angeordnet sein, wobei diese als eine Steckleiste erhaben von der ersten Gehäusewandung 14 angeordnet sind. Die Steck-/Anschlusselemente 24 können als eine PCI-Steckleiste ausgebildet sein.

Zur mechanischen Kopplung zwischen dem Verteilmodul 3 und dem zweiten Peripheriemodul 4 ist eine zweite Rasteinrichtung 25 vorgesehen, die den gleichen Aufbau aufweist wie die erste Rasteinrichtung 18. Die Rasteinrichtung 25 umfasst von der seitlichen Gehäusewandung 16 des Verteilmoduls 3 abragende Rastelemente 34, die in der Montagestellung (Verriegelungsstellung) einen nicht dargestellten und an dem zweiten Pheripheriemodul 4 angeordneten Steg hintergreifen.

Die zweite Rasteinrichtung 25 erstreckt sich an der zweiten Gehäusewandung 16 des Verteilmoduls 3 und ist mittels eines zu der ersten Rasteinrichtung 18 gleichartig ausgebildeten zweiten Betätigungselementes 26 bedienbar. Ein dem zweiten Betätigungselement 26 zugeordnetes Hinweiselement 27 (Pfeil) ermöglicht die einfache visuelle Signalisierung der Zuordnung bzw. Wirkungsebenen der zweiten Rasteinrichtung 25.

Zur elektrischen Kontaktierung zwischen dem Verteilmodul 3 und dem zweiten Peripheriemodul 4 ist eine zweite Steckeinrichtung 28 vorgesehen, die über leistenförmig Steck-/Anschlusselementen 29 verfügt, wobei ein Steck-/Anschlusselement 29 des Verteilmoduls 3 von der zweiten Gehäusewandung 16 abragt. Die leistenförmigen Steck-/Anschlusselemente 29 des Verteilmoduls 3 weisen zur Vorderseite 20 gerichtete Pins 30 auf. Die korrespondierenden Steck-/Anschlusselemente des Peripheriemoduls 4 sind komplementär zu den Steck-/Anschlusselementen 29 in einer nicht dargestellten Ausnehmung an der zweiten Gehäusewandung 16 des Verteilmoduls 3 zugewandten Seitenwandung 15 des Peripheriemoduls 4 angeordnet. Die Tiefe und die Länge der Ausnehmung ist derart gewählt, dass nach Betätigen des zweiten Betätigungselementes 26 und damit vorliegender Entriegelung zwischen dem Verteilmodul 3 und dem Peripheriemodul 4 dasselbe durch eine kombinierte Bewegung nach vorne und dann zur Seite gemäß Pfeil 31 von dem Verteilmodul 3 bzw. dem Rechnermodul 2 entfernt werden kann. Die Demontagebewegung bzw. Montagebewegung des Peripheriemoduls 4 erfolgt in einer parallel zur ersten Gehäusewandung 14 des Verteilmoduls 3 verlaufenden Ebene, so dass ein Entfernen des Peripheriemoduls 4 von dem Verteilmodul 3 ermöglicht wird, ohne dass zuvor das Rechnermodul 2 von dem Verteilmodul 3 entfernt werden muss.

Da keine mechanische und elektrische Kopplung zwischen dem Rechnermodul 2 und dem Peripheriemodul 4 gegeben ist - mithin eine obere Gehäusewandung des Peripheriemoduls 4 in der Montagestellung flächig an einer unteren Gehäusewandung des Rechnermoduls 2 anliegt, kann das Rechnermodul 2 nach Entriegelung mittels Betätigen des ersten Betätigungselementes 21 durch Anheben von den beiden anderen Modulen 3, 4 entfernt werden. Zum Montieren des Rechnermoduls 2 wird dieses unter Anlage der Rückseite 6 desselben an eine vom hinteren Rand der ersten Gehäusewandung 14 des Verteilmoduls 3 senkrecht zu derselben abragenden Halteleiste 32 unter Bildung eines spitzen Winkels der zueinander gekehrten Gehäusewandungen 14 des Verteilmoduls 3 und des Rechnermoduls 2 angesetzt und dann nach unten verschwenkt, bis eine selbsttätige Verriegelung der Rastelemente 19 der ersten Rasteinrichtung 18 erfolgt. Bei der Demontage löst die Betätigung des ersten Betätigungselementes 21 die Verriegelung der ersten Rasteinrichtung 18, so dass das Rechnermodul 2 unter Anlage der Rückseite 6 derselben an der Halteleiste 32 nach oben in Pfeilrichtung 33 verschwenkt werden kann und dann nach vorne entfernt werden kann.

## Patentansprüche

1. Kassensystem für die Abwicklung von Verkaufs- oder Zahlungsvorgängen mit einem Rechnermodul zur elektronischen Verarbeitung von zahlungsrelevanten Daten, mit mindestens einem Peripheriemodul, das mit dem Rechnermodul elektrisch und mechanisch verbunden ist, wobei sich an einer Gehäusewandung des Rechnermoduls eine Gehäusewandung mindestens eines Peripheriegerätes unter paralleler Anordnung der zueinander gekehrten Gehäusewandungen des Rechnermoduls und des Peripheriemoduls anschließt, **dadurch gekennzeichnet, dass** das Peripheriemodul (3) über eine elektrische Steckeinrichtung (23, 28) mit dem Rechnermodul (2) und/oder mit einem weiteren Peripheriemodul (4) elektrisch kontaktiert ist, wobei die elektrische Steckeinrichtung (23, 28) zumindest korrespondierende Steck-/Anschlusselemente (24, 29) aufweist, die jeweils an den zueinander gekehrten Gehäusewandungen (14, 15) der benachbarten Module (2, 3, 4) angeordnet sind, und dass das Peripheriemodul (3) mittels einer Rasteinrichtung (18, 25) mit dem Rechnermodul (2) und/oder mit mindestens dem weiteren Peripheriemodul (4) mechanisch verriegelbar ist.

2. Kassensystem nach Anspruch 1, **dadurch gekennzeichnet, dass** dem Rechnermodul (2) zumindest zwei Peripheriemodule (3, 4) zugeordnet sind, die in der Montagestellung flächig an der einen Gehäusewandung des Rechnermoduls (2) anliegen, wobei ein Peripheriemodul (3) als ein Verteilmodul ausgebildet ist, das an einer ersten Gehäusewandung (14) erste Steck-/Anschlusselemente (24) und erste Rastelemente (19) zur Verbindung mit dem Rechnermodul (2) und das an einer zweiten Gehäusewandung (16) zweite Steck-/Anschlusselemente (29) und zweite Rastelemente (34) zur Verbindung mit dem Peripheriemodul (4) aufweist.

3. Kassensystem nach Anspruch 1 oder 2, **dadurch gekennzeichnet, dass** das Rechnermodul (2) und die Peripheriemodule (3, 4) jeweils quaderförmig ausgebildet und dass die erste Gehäusewandung (14) des Verteilmoduls (3) senkrecht zu der zweiten Gehäusewandung (16) desselben verläuft.

4. Kassensystem nach einem der Ansprüche 1 bis 3, **dadurch gekennzeichnet, dass** das Rechnermodul (2) und die Peripheriemodule (3, 4) derart dimensioniert sind, dass sie im montierten Zustand eine quaderförmige Baueinheit (1) bilden.

5. Kassensystem nach einem der Ansprüche 1 bis 4, **dadurch gekennzeichnet, dass** das Verteilmodul (3) an einer Vorderseite (20) eine zu der Anzahl der Rasteinrichtungen (18, 25) übereinstimmende Anzahl von Betätigungselementen (21, 26), insbesondere Tastenelemente, aufweist zur Betätigung der jeweiligen Rasteinrichtung (18, 25).

6. Kassensystem nach einem der Ansprüche 1 bis 5, **dadurch gekennzeichnet, dass** das Rechnermodul (2) und die Peripheriemodule (3, 4) jeweils an einer Rückseite (6, 7, 8) derselben Anschlüsse (9, 10, 11, 11', 12, 13) aufweisen zur Verbindung mit weiteren Peripheriegeräten und/oder mit einem Stromversorgungsanschluß und dass sich die Rückseiten (6, 7, 8) der Module (2, 3, 4) im montierten Zustand in einer gemeinsamen Ebene erstrecken.

7. Kassensystem nach einem der Ansprüche 1 bis 6, **dadurch gekennzeichnet, dass** das Verteilmodul (3) als ein Hub ausgebildet ist und dass das weitere Peripheriemodul (4) als ein Netzteil ausgebildet sind.

8. Kassensystem nach einem der Ansprüche 1 bis 7, **dadurch gekennzeichnet, dass** in dem Verteilmodul (3) eine Speichereinheit (5) integriert angeordnet ist.

9. Kassensystem nach einem der Ansprüche 1 bis 8, **dadurch gekennzeichnet, dass** die erste Rasteinrichtung (18) und die zweite Rasteinrichtung (25) jeweils Rastelemente (19, 34) aufweisen, die jeweils in der Verriegelungsstellung einen demselben zugeordneten und an dem anderen Modul (2, 4) angeordneten Steg hintergreifen.

10. Kassensystem nach einem der Ansprüche 1 bis 9, **dadurch gekennzeichnet, dass** den Betätigungselementen (21, 26) jeweils Hinweiselemente (22, 27) zugeordnet sind zur visuellen Signalisierung der Wirkungsebene der Rasteinrichtung der ersten Rasteinrichtung (18) und/oder der zweiten Rasteinrichtung (25).

## Claims

1. Checkout system for handling sales or payment processes, having a computer module for electronically processing payment-related data, having at least one peripheral module which is electrically and mechanically connected to the computer module, with a housing wall of at least one peripheral device adjoining a housing wall of the computer module with parallel arrangement of the housing walls, which face one another, of the computer module and of the peripheral module, **characterized in that** the peripheral module (3) makes electrical contact with the computer module (2) and/or with a further peripheral module (4) by means of an electrical plug device (23, 28), with the electrical plug device (23, 28) having at least corresponding plug/connection elements (24, 29) which are in each case arranged on housing walls (14, 15), which face one another, of the adjacent modules (2, 3, 4), and **in that** the peripheral module (3) can be mechanically locked to the computer module (2) and/or to at least the further peripheral module (4) by means of a latching device (18, 25).

2. Checkout system according to Claim 1, **characterized in that** the computer module (2) has at least two associated peripheral modules (3, 4) which bear flat against one housing wall of the computer module (2) in the assembly position, with a peripheral module (3) being in the form of a distribution module which has first plug/connection elements (24) and first latching elements (19) for connection to the computer module (2) on a first housing wall (14), and which has second plug/connection elements (29) and second latching elements (34) for connection to the peripheral module (4) on a second housing wall (16).

3. Checkout system according to Claim 1 or 2, **characterized in that** the computer module (2) and the peripheral modules (3, 4) are each of cuboidal design, and **in that** the first housing wall (14) of the distribution module (3) runs perpendicular to the second housing wall (16) of said distribution module.

4. Checkout system according to one of Claims 1 to 3, **characterized in that** the computer module (2) and the peripheral modules (3, 4) are dimensioned in such a way that they form a cuboidal structural unit (1) in the assembled state.

5. Checkout system according to one of Claims 1 to 4, **characterized in that** the distribution module (3) has a number of operating elements (21, 26), in particular key elements, which corresponds to the number of latching devices (18, 25), for operating the respective latching device (18, 25).

6. Checkout system according to one of Claims 1 to 5, **characterized in that** the computer module (2) and the peripheral modules (3, 4) each have the same connections (9, 10, 11, 11', 12, 13) on their rear face (6, 7, 8) for connection to further peripheral devices and/or to a power supply connection, and **in that** the rear faces (6, 7, 8) of the modules (2, 3, 4) extend in a common plane in the assembled state.

7. Checkout system according to one of Claims 1 to 6, **characterized in that** the distribution module (3) is in the form of a hub, and **in that** the further peripheral module (4) is in the form of a power supply unit.

8. Checkout system according to one of Claims 1 to 7, **characterized in that** a memory unit (5) is arranged in an integrated manner in the distribution module (3).

9. Checkout system according to one of Claims 1 to 8, **characterized in that** the first latching device (18) and the second latching device (25) each have latching elements (19, 34) which each engage behind a crosspiece, which is associated with same and is arranged on the other module (2, 4), in the locked position.

10. Checkout system according to one of Claims 1 to 9, **characterized in that** reference elements (22, 27) are in each case associated with the operating elements (21, 26) for the purpose of visually indicating the plane of action of the latching device of the first latching device (18) and/or of the second latching device (25).

## Revendications

1. Système de caisse pour l'exécution de processus de vente et de paiement avec un module de calcul pour le traitement électronique de données utiles au paiement, avec au moins un module périphérique qui est raccordé au module de calcul de façon électrique et mécanique, une paroi de boîtier d'au moins un appareil périphérique se raccordant à une paroi de boîtier du module de calcul grâce à un agencement parallèle des parois de boîtier orientées l'une vers l'autre du module de calcul et du module périphérique, **caractérisé en ce que** le module périphérique (3) est placé en contact électrique avec le module de calcul (2) et/ou avec un autre module périphérique (4) par le biais d'un dispositif d'enfichage électrique (23, 28), le dispositif d'enfichage électrique (23, 28) comportant au moins les éléments d'enfichage/de raccordement (24, 29) correspondants disposés respectivement au niveau des parois de boîtier (14, 15) orientées l'une vers l'autre des modules (2, 3, 4) connexes et **en ce que** le module périphérique (3) peut être verrouillé mécaniquement au module de calcul (2) et/ou à l'autre module périphérique (4) au moins à l'aide d'un dispositif d'encliquetage (18, 25).

2. Système de caisse selon la revendication 1, **caractérisé en ce qu'**au moins deux modules périphériques (3, 4) sont associés au module de calcul (2), lesdits modules reposant, dans la position de montage, à plat contre la paroi de boîtier du module de calcul (2), un module périphérique (3) étant réalisé sous la forme d'un module de répartition qui comporte, au niveau d'une première paroi de boîtier (14), des premiers éléments d'enfichage/de raccordement (24) et des premiers éléments d'encliquetage (19) pour le raccordement avec le module de calcul (2) et qui comporte, au niveau d'une deuxième paroi de boîtier (16), des deuxièmes éléments d'enfichage/de raccordement (29) et des deuxièmes éléments d'encliquetage (34) pour le raccordement avec le module périphérique (4).

3. Système de caisse selon la revendication 1 ou 2, **caractérisé en ce que** le module de calcul (2) et les modules périphériques (3, 4) prennent respectivement une forme de parallélépipède rectangle et **en ce que** la première paroi de boîtier (14) du module de répartition (3) s'étend perpendiculairement à la deuxième paroi de boîtier (16) de celui-ci.

4. Système de caisse selon l'une quelconque des revendications 1 à 3, **caractérisé en ce que** le module de calcul (2) et les modules périphériques (3, 4) sont dimensionnés de telle sorte qu'ils forment à l'état monté une unité fonctionnelle (1) en forme de parallélépipède rectangle.

5. Système de caisse selon l'une quelconque des revendications 1 à 4, **caractérisé en ce que** le module de répartition (3) comporte au niveau d'un côté avant (20) un nombre d'éléments d'actionnement (21, 26), notamment d'éléments de touche, correspondant au nombre de dispositifs d'encliquetage (18, 25) de façon à permettre l'actionnement de chaque dispositif d'encliquetage (18, 25) respectif.

6. Système de caisse selon l'une quelconque des revendications 1 à 5, **caractérisé en ce que** le module de calcul (2) et les modules périphériques (3, 4) comportent respectivement au niveau d'un côté arrière (6, 7, 8) les mêmes raccords (9, 10, 11, 11', 12, 13) pour permettre le raccord avec d'autres appareils périphériques et/ou avec un raccord d'alimentation en courant et **en ce que** les côtés arrière (6, 7, 8) des modules (2, 3, 4) s'étendent dans un plan commun à l'état monté.

7. Système de caisse selon l'une quelconque des revendications 1 à 6, **caractérisé en ce que** le module de répartition (3) prend la forme d'un répéteur et **en ce que** l'autre module périphérique (4) prend la forme d'un élément de mise en réseau.

8. Système de caisse selon l'une quelconque des revendications 1 à 7, **caractérisé en ce qu'**une unité de mémoire (5) est disposée de façon intégrée dans le module de répartition (3).

9. Système de caisse selon l'une quelconque des revendications 1 à 8, **caractérisé en ce que** le premier dispositif d'encliquetage (18) et le deuxième dispositif d'encliquetage (25) comportent respectivement des éléments d'encliquetage (19, 34) qui imbriquent respectivement par l'arrière, en position de verrouillage, une âme associée à chaque élément et disposée au niveau de l'autre module (2, 4).

10. Système de caisse selon l'une quelconque des revendications 1 à 9, **caractérisé en ce que** les éléments d'actionnement (21, 26) sont respectivement associés à des éléments de signalisation (22, 27) utilisés pour la signalisation visuelle du plan d'action du dispositif d'encliquetage du premier dispositif d'encliquetage (18) et/ou du deuxième dispositif d'encliquetage (25).
